# EUROPEAN PATENT SPECIFICATION

(11) **EP 3 402 249 B1**
(45) Date of publication and mention of the grant of the patent: **07.07.2021**
(21) Application number: 17170780.5
(22) Date of filing: 12.05.2017
(51) Int. Cl.: H04W 48/16, H04W 88/06

(54) **COMMUNICATION DEVICE AND METHOD FOR CONTROLLING A COMMUNICATION SUBSYSTEM**
KOMMUNIKATIONSVORRICHTUNG UND VERFAHREN ZUR STEUERUNG EINES KOMMUNIKATIONS-SUBSYSTEMS
DISPOSITIF DE COMMUNICATION ET PROCÉDÉ DE COMMANDE D'UN SOUS-SYSTÈME DE COMMUNICATION

(43) Date of publication of application: 14.11.2018
(73) Proprietor: Intel IP Corporation, Santa Clara, CA 95054 (US)
(72) Inventor: MUECK, Markus Dominik, 85579 Neubiberg (DE); LEGUTKO, Christoph, 81925 München (DE)
(74) Representative: Viering, Jentschura & Partner mbB Patent- und Rechtsanwälte

(56) References cited:
- EP-A1- 2 079 260
- US-A1- 2013 303 232
- US-A1- 2016 014 611

## Description

### Technical Field

Exemplary implementations described herein generally relate to communication devices and methods for controlling a communication subsystem.

### Background

A radio device typically has to fulfill certain requirements in order to be allowed to be operated in a specific country or region, e.g. with respect to transmission power. According to the Radio Equipment Directive (RED) currently being discussed in Europe, the manufacturer of a radio device may be responsible for ensuring that a radio device supports features in order to ensure that software can only be loaded into the radio device where the compliance of the combination of the radio equipment and software has been demonstrated. Therefore, efficient mechanisms are desirable that allow ensuring compliance of a radio device which executes software with local regulations.

Document US 2013/303232 A1 discloses a method in which after having started a communication (triggered by e.g. a P2P application) using a default power level compliant with requirements across multiple regulatory domains, the UE determines its geographic location and, referencing a locally stored library, it also determines the maximum power at which it may currently legally transmit. The power level limit is adapted accordingly.

### Summary of the Invention

The invention is set out in the independent claims. Particular embodiments of the invention are set out in the dependent claims.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- Figure 1: shows a radio equipment including an application processor executing an application.
- Figure 2: illustrates a radio equipment providing an entity for verifying changes to essential parameters.
- Figure 3: shows a radio equipment allowing an external modification of parameter restrictions.
- Figure 4: shows a radio equipment including a trusted location determination.
- Figure 5: shows a radio equipment acquiring location information for essential parameter control via a connectivity subsystem.
- Figure 6: shows a radio equipment allowing authorized expert users to circumvent internal essential parameter control.
- Figure 7: shows a communication device.
- Figure 8: shows a flow diagram illustrating a method for controlling a communication subsystem.

### Description of Exemplary Implementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

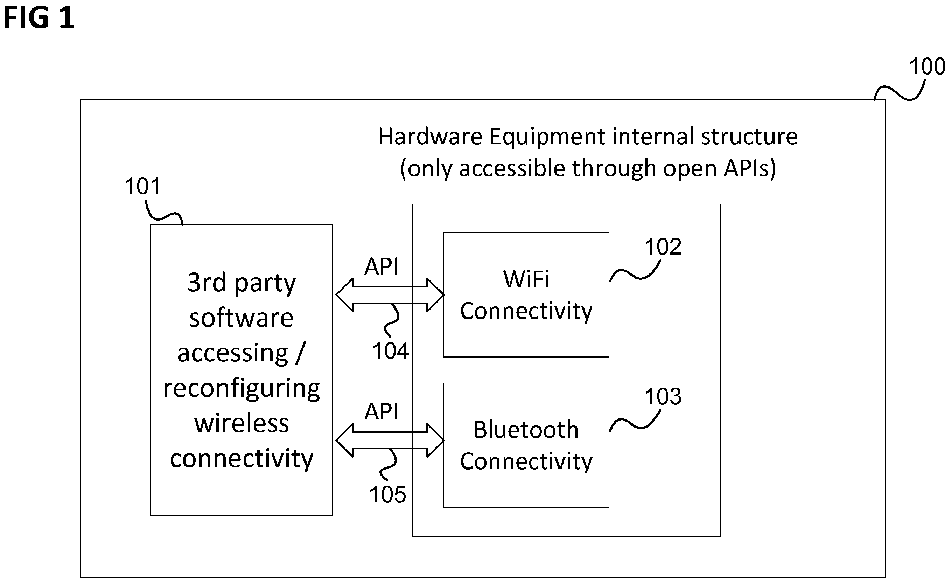

A radio device or radio equipment, i.e. an electronic device supporting radio communication such as a smartphone or a laptop, typically has an application processor which allows the radio equipment to execute various applications as illustrated in figure 1.

Figure 1 shows a radio equipment 100 including an application processor 101 executing an application, i.e. software.

It should be noted that the term "software" may be understood in a broad sense, i.e. it can be executable (binary) code, source code to be processed by an interpreter or similar or intermediate representation code (IR code) which is typically further processed (typically by a compiler) on the target platform in order to obtain executable code. The software may be executed on any kind of computational resources, including FPGA (Field Programmable Gate Array) resources, Digital Signal Processor (DSP) resources, central processing unit (CPU) resources, dedicated accelerator components, etc. Also, the term "software" may include parameterization of (reconfigurable) hardware components, such as accelerators (including for example (Inverse) Fast Fourier Transform, Turbo Code Decoder/Encoder, Multiple-Input-Multiple-Output (MIMO) antenna processing, etc.).

The radio equipment 100 further includes communication hardware implementing communication subsystems according to various radio access technologies (RATs), in this example a WiFi communication subsystem 102 and a Bluetooth communication subsystem 103. The communication subsystems 102, 103 may be implemented on a common chip or may be implemented by different chips. Each communication subsystem 102, 103 may include baseband processing functionality and radio frequency processing functionality. For providing the baseband functionality, a communication subsystem 102, 103 may for example include a baseband processor which may include hardware accelerators for performing a Fast Fourier Transformation, for performing a Turbo Decoding, a MIMO (Multiple-I nput Multiple-Output) modulation etc. For the radio frequency processing functionality, the communication subsystem 102, 103 may include one or more filters, one or more mixers, one or more amplifiers etc.

The communication subsystems 102, 103 may may operate according to any one or more of the following radio communication technologies and/or standards including but not limited to: a Global System for Mobile Communications (GSM) radio communication technology, a General Packet Radio Service (GPRS) radio communication technology, an Enhanced Data Rates for GSM Evolution (EDGE) radio communication technology, and/or a Third Generation Partnership Project (3GPP) radio communication technology, for example Universal Mobile Telecommunications System (UMTS), Freedom of Multimedia Access (FOMA), 3GPP Long Term Evolution (LTE), 3GPP Long Term Evolution Advanced (LTE Advanced), Code division multiple access 2000 (CDMA2000), Cellular Digital Packet Data (CDPD), Mobitex, Third Generation (3G), Circuit Switched Data (CSD), High-Speed Circuit-Switched Data (HSCSD), Universal Mobile Telecommunications System (Third Generation) (UMTS (3G)), Wideband Code Division Multiple Access (Universal Mobile Telecommunications System) (W-CDMA (UMTS)), High Speed Packet Access (HSPA), High-Speed Downlink Packet Access (HSDPA), High-Speed Uplink Packet Access (HSUPA), High Speed Packet Access Plus (HSPA+), Universal Mobile Telecommunications System-Time-Division Duplex (UMTS-TDD), Time Division-Code Division Multiple Access (TD-CDMA), Time Division-Synchronous Code Division Multiple Access (TD-CDMA), 3rd Generation Partnership Project Release 8 (Pre-4th Generation) (3GPP Rel. 8 (Pre-4G)), 3GPP Rel. 9 (3rd Generation Partnership Project Release 9), 3GPP Rel. 10 (3rd Generation Partnership Project Release 10), 3GPP Rel. 11 (3rd Generation Partnership Project Release 11), 3GPP Rel. 12 (3rd Generation Partnership Project Release 12), 3GPP Rel. 13 (3rd Generation Partnership Project Release 13), 3GPP Rel. 14 (3rd Generation Partnership Project Release 14), 3GPP Rel. 15 (3rd Generation Partnership Project Release 15), 3GPP Rel. 16 (3rd Generation Partnership Project Release 16), 3GPP Rel. 17 (3rd Generation Partnership Project Release 17), 3GPP Rel. 18 (3rd Generation Partnership Project Release 18), 3GPP 5G, 3GPP LTE Extra, LTE-Advanced Pro, LTE Licensed-Assisted Access (LAA), MuLTEfire, UMTS Terrestrial Radio Access (UTRA), Evolved UMTS Terrestrial Radio Access (E-UTRA), Long Term Evolution Advanced (4th Generation) (LTE Advanced (4G)), cdmaOne (2G), Code division multiple access 2000 (Third generation) (CDMA2000 (3G)), Evolution-Data Optimized or Evolution-Data Only (EV-DO), Advanced Mobile Phone System (1st Generation) (AMPS (1G)), Total Access Communication System/Extended Total Access Communication System (TACS/ETACS), Digital AMPS (2nd Generation) (D-AMPS (2G)), Push-to-talk (PTT), Mobile Telephone System (MTS), Improved Mobile Telephone System (IMTS), Advanced Mobile Telephone System (AMTS), OLT (Norwegian for Offentlig Landmobil Telefoni, Public Land Mobile Telephony), MTD (Swedish abbreviation for Mobiltelefonisystem D, or Mobile telephony system D), Public Automated Land Mobile (Autotel/PALM), ARP (Finnish for Autoradiopuhelin, "car radio phone"), NMT (Nordic Mobile Telephony), High capacity version of NTT (Nippon Telegraph and Telephone) (Hicap), Cellular Digital Packet Data (CDPD), Mobitex, DataTAC, Integrated Digital Enhanced Network (iDEN), Personal Digital Cellular (PDC), Circuit Switched Data (CSD), Personal Handy-phone System (PHS), Wideband Integrated Digital Enhanced Network (WiDEN), iBurst, Unlicensed Mobile Access (UMA), also referred to as also referred to as 3GPP Generic Access Network, or GAN standard), Zigbee, Bluetooth®, Wireless Gigabit Alliance (WiGig) standard, mmWave standards in general (wireless systems operating at 10-300 GHz and above such as WiGig, IEEE 802.11 ad, IEEE 802.11 ay, etc.), technologies operating above 300 GHz and THz bands, (3GPP/LTE based or IEEE 802.11p and other) Vehicle-to-Vehicle (V2V) and Vehicle-to-X (V2X) and Vehicle-to-Infrastructure (V2I) and Infrastructure-to-Vehicle (I2V) communication technologies, 3GPP cellular V2X, DSRC (Dedicated Short Range Communications) communication systems such as Intelligent-Transport-Systems and others, etc.

Furthermore, the approaches described in the following can be used in the context of (e.g. communication subsystems 102, 103 may operate according to) any spectrum management scheme including dedicated licensed spectrum, unlicensed spectrum, (licensed) shared spectrum (such as LSA = Licensed Shared Access in 2.3-2.4 GHz, 3.4-3.6 GHz, 3.6-3.8 GHz and further frequencies and SAS = Spectrum Access System in 3.55-3.7 GHz and further frequencies). Applicable spectrum bands include IMT (International Mobile Telecommunications) spectrum (including 450 -470 MHz, 790 - 960 MHz, 1710 - 2025 MHz, 2110 - 2200 MHz, 2300 - 2400 MHz, 2500 - 2690 MHz, 698-790 MHz, 610 - 790 MHz, 3400 - 3600 MHz, etc). Note that some bands are limited to specific region(s) and/or countries), IMT-advanced spectrum, IMT-2020 spectrum (expected to include 3600-3800 MHz, 3.5 GHz bands, 700 MHz bands, bands within the 24.25-86 GHz range, etc.), spectrum made available under FCC's "Spectrum Frontier" 5G initiative (including 27.5 - 28.35 GHz, 29.1 - 29.25 GHz, 31 - 31.3 GHz, 37 - 38.6 GHz, 38.6 - 40 GHz, 42 - 42.5 GHz, 57 - 64 GHz, 64 - 71 GHz, 71 - 76 GHz, 81 - 86 GHz and 92 - 94 GHz, etc), the ITS (Intelligent Transport Systems) band of 5.9 GHz (typically 5.85-5.925 GHz) and 63-64 GHz, bands currently allocated to WiGig such as WiGig Band 1 (57.24-59.40 GHz), WiGig Band 2 (59.40-61.56 GHz) and WiGig Band 3 (61.56-63.72 GHz) and WiGig Band 4 (63.72-65.88 GHz), the 70.2 GHz - 71 GHz band, any band between 65.88 GHz and 71 GHz, bands currently allocated to automotive radar applications such as 76-81 GHz, and future bands including 94-300 GHz and above. Furthermore, the approaches can be used on a secondary basis on bands such as the TV White Space bands (typically below 790 MHz) where in particular the 400 MHz and 700 MHz bands are promising candidates. Besides cellular applications, specific applications for vertical markets may be addressed such as PMSE (Program Making and Special Events), medical, health, surgery, automotive, low-latency, drones, etc. applications.

It should furthermore be noted that a hierarchical application of the approaches described in the following is possible, e.g. by introducing a hierarchical prioritization of usage for different types of users (e.g., low/medium/high priority, etc.), based on a prioritized access to the spectrum e.g. with highest priority to tier-1 users, followed by tier-2, then tier-3, etc. users, etc. The approaches described in the following can also be applied to systems using modulation techniques such as Single Carrier or OFDM flavors (CP-OFDM, SC-FDMA, SC-OFDM, filter bank-based multicarrier (FBMC), OFDMA, etc.) and in particular 3GPP NR (New Radio) by allocating the OFDM carrier data bit vectors to the corresponding symbol resources.

The application running on application processor 101 may be third party software (i.e. provided from a different party than the manufacturer of the radio equipment 100) which may access the communication subsystems 102, 103 via interfaces 104, 105 (e.g. implementing APIs (application programming interfaces)) and may attempt to reconfigure the communication subsystems 102, 103.

For example, in case that the radio equipment 100 is a laptop permitting the usage of open source operating systems (such as LINUX, etc.) and open source connectivity drivers (such as WiFi drivers), etc., the drivers often may have direct access to the hardware configuration APIs 104, 105 allowing the modification of essential parameters of the communication subsystems 102, 103 such as output power levels etc.

This approach is viable under the European R&TTE (Radio and Telecommunication Terminal Equipment) directive, since this directive does not address a joint responsibility for hardware (HW) and software (SW). However, in the RED directive which is currently discussed in Europe, this approach would lead to the HW Manufacturer taking full responsibility and liability for the joint operation of HW and SW.

Namely, the European "Radio Equipment Directive (RED)" introduces requirements for the joint Operation of Hardware and Software in Article 3(3)(i):
3. Radio equipment within certain categories or classes shall be so constructed that it complies with the following essential requirements:
(i) radio equipment supports certain features in order to ensure that software can only be loaded into the radio equipment where the compliance of the combination of the radio equipment and software has been demonstrated.

It should be noted that this requirement can be seen to relate to any kind of software, including for example open source operating systems and device drivers. The Equipment Manufacturer may thus be finally made responsible for the combination of HW and SW, even if the equipment manufacturer has no relationship with the SW manufacturing process. This may lead to a significant issue for the manufacturer regarding responsibility and liability.

It should be noted that the terms "essential parameters" and "essential requirements" are European specific terms used in the context of the RED. In other regions (Americas, Europe, Japan, etc.) similar concepts may apply but the terminology may be different. In particular, other regions include the US where the regulation administration (FCC) applies so-called type-approval, i.e. each device is checked by an accredited laboratory before it can be introduced into the market. Still, the FCC is requesting similar protection mechanisms as they are required in the European context and as they are described herein.

In the following, approaches are described which allow executing any kind of software (in particular open source operating systems, connectivity drivers, etc. in the case of laptops or similar) on an application processor in a radio equipment while maintaining control over certain communication parameters, e.g. communication parameters that fall under the RED (so called "essential parameters"). This allows a manufacturer to address the liability and responsibility issues without simply preventing access for third party software to any communication parameter which may lead to liability/responsibility issues.

According to various examples, a secure control entity, also referred to as configuration management block (CMB), is introduced into a radio equipment. This may be done under full control of the manufacturer. The radio equipment is configured such that any change of RED "essential parameters" (such as output power levels, frequency selection, etc.) needs to be authorized by the CMB, otherwise it is not performed.

As mentioned above, the parameters which need to be authorized by the CMB, in other words the parameters which are monitored, which are the "essential parameters" in Europe, may be different in other regions or countries. This may be taken into account in the approaches described in the following. In particular, the approaches described in the following may be applied to different countries or regions.

The communication terminal may for example be a portable phone and may include typical communication terminal components such as a transceiver, an antenna, a subscriber identity module, an application processor, a memory, a display, a battery, a speaker, a microphone etc.

According to various examples, first, essential parameters, i.e. those parameters which affect the compliance of a radio equipment to the essential requirements of the RED (or any other applicable regulation), are identified. These essential parameters may in particular include
- Output power levels (maximum output power levels may differ in different regions, such as Americas, Europe, Japan, etc.). There is for example a difference in WiFi output power limits between different countries and regions;
- Frequency allocation (which frequency bands can be selected and which band with is being used. Some bands are available world-wide while others have specific requirements (such as DFS (Dynamic Frequency Selection) for radar protection) in some regions such as Americas, Europe, Japan, etc.);
- Activation/De-Activation of DFS etc.
- Provision of software components which affect lower communication layer (typically layer 1, 2 and/or 3) behavior of HW components (wherein the layers are for example to be understood according to the OSI (Open Systems Interconnection) reference model);
- Beamforming parameters (there may be limitations on the maximum EIRP (equivalent isotropically radiated power) and thus implicitly on the beam directivity at a given total output power level which are different in different regions; this is for example under discussion for millimeter wave systems).
- Channel Access Parameters (e.g., maximum duration of a transmission opportunity in WiFi systems, contention window parameterization for the WiFi CSMA/CA protocol, etc.)

The essential parameters are not restricted to this list. Further parameters may be taken into account as essential parameters.

According to various examples, third party software (e.g. an open source operating system) still has direct access to the concerned APIs - except for the essential parameters. Third party software has to request a change of an essential parameter through a closed, manufacturer controlled entity (the CMB) which first validates their compliance with respect to the application regulation requirements according to the local regulation applicable for the current location of the radio equipment.

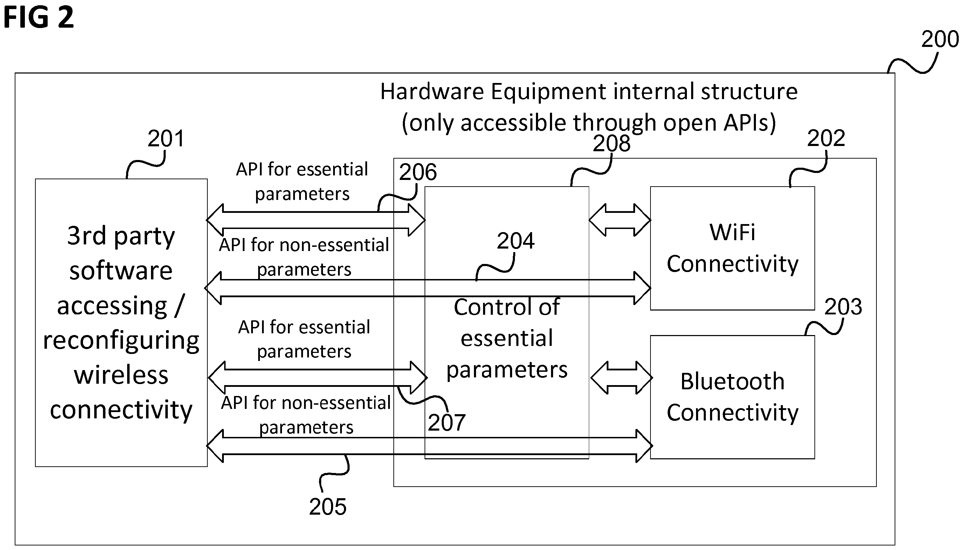

Figure 2 illustrates a radio equipment 200 providing an entity for verifying changes to essential parameters (alternatively, also other parameters (not being part of the essential parameters) can be verified through this entity). These aspects are not according to the invention and are provided for illustration purposes only.

Similarly to the radio equipment 100, the radio equipment 200 includes an application processor 201 executing an application, i.e. software, e.g. third party software, i.e. software provided by a different manufacturer than the manufacturer of the radio equipment 200.

The radio equipment 200 further includes communication hardware implementing communication subsystems according to various radio access technologies (RATs), in this example a WiFi communication subsystem 202 and a Bluetooth communication subsystem 203. The communication subsystems 202, 203 may be implemented on a common chip or may be implemented by different chips. Each communication subsystem 202, 203 may include baseband processing functionality and radio frequency processing functionality. For providing the baseband functionality, a communication subsystem 202, 203 may for example include a baseband processor which may include hardware accelerators for performing a Fast Fourier Transformation, for performing a Turbo Decoding, a MIMO (Multiple-I nput Multiple-Output) modulation etc. For the radio frequency processing functionality, the communication subsystem 202, 203 may include one or more filters, one or more mixers, one or more amplifiers etc.

The application may be software which may access the communication subsystems 202, 203 directly via a first direct interface 204 (to the WiFi communication subsystem 202) and a second direct interface 205 (to the Bluetooth communication subsystem 203), which e.g. implement APIs, e.g. to reconfigure the communication subsystems 202, 203. However, this is only allowed for non-essential parameters, i.e. for parameters that are not defined as essential parameters.

For modifying an essential parameter, the application needs to use a first indirect interface 206 (to the WiFi communication subsystem 202) or a second indirect interface 207 (to the Bluetooth communication subsystem 203). The first indirect interface 206 and the second indirect interface 207 provide access to the communication subsystems 202, 203 via a control entity 208 (e.g. implemented by a hardware controller). In other words, the control entity 208 is arranged in an interface path of the indirect interfaces 206, 207.

The control entity 208 may for example perform the following tasks depending on the concerned essential parameter:
- In case that a parameter is requested by the application (i.e. by application processor 201) to be modified to a certain value t in a communication subsystem 203, 204 and the locally applicable regulation (at the location where the equipment is operated) allows for a certain interval (or a number of intervals) of approved values for the essential parameter ranging from v_min to v_max, the control entity 208 verifies whether the requested value t lies in the interval, i.e. checks whether v_min <= t <= v_max
   If it falls into this interval, the control entity 208 authorizes the modification of the essential parameter and requests the concerned communication subsystem 203, 204 to be reconfigured to this value. In case that t < v_min the control entity 208 rejects the modification of the parameter (i.e. the control entity 208 and the concerned communication subsystem 203, 204 do not perform a change of configuration). Alternatively, the concerned communication subsystem 203, 204 may be reconfigured to the allowed minimum value, i.e. v_min, e.g. depending on the type of parameter or a setting of the control entity 208.
   In case that t > v_max the control entity 208 rejects the modification of the parameter (i.e. the control entity 208 and the concerned communication subsystem 203, 204 do not perform a change of configuration). Alternatively, the concerned communication subsystem 203, 204 may be reconfigured to the allowed maximum value, i.e. v_max, e.g. depending on the type of parameter or a setting of the control entity 208.
   ∘ A typical example is the choice of the output power level. In case that an output power level is requested by a third party software (e.g. an open source operating system) which exceeds the allowed maximum value in a given administrative region, the maximum allowed value is configured instead by the control entity 208.
- In case that a parameter is requested by the application (i.e. by application processor 201) to be modified to a certain value t in a communication subsystem 203, 204 and the locally applicable regulation (at the location where the equipment is operated) allows for specific discrete values [v_0, v_1, ...., v_N] only, the control entity 208 verifies whether the requested value t is a valid element of the applicable set of discrete values. If this is the case the control entity 208 reconfigures the concerned communication subsystem 203, 204 to the requested value t. If not the control entity 208 either rejects the request (i.e. does not initiate a reconfiguration of the parameter in the concerned communication subsystem 203, 204) or chooses the closest applicable value from the allowed value set. For example, the control entity 208 reconfigures the concerned communication subsystem 203, 204 to a value t_modified=v_0 if t is closest to v_0 (i.e. |t-v_0| is smaller than |t-v_1|, |t-v_v|, ..., |t-v_N|) or analogously to v_1, v_2, .., v_N if t is closest to one of these values.

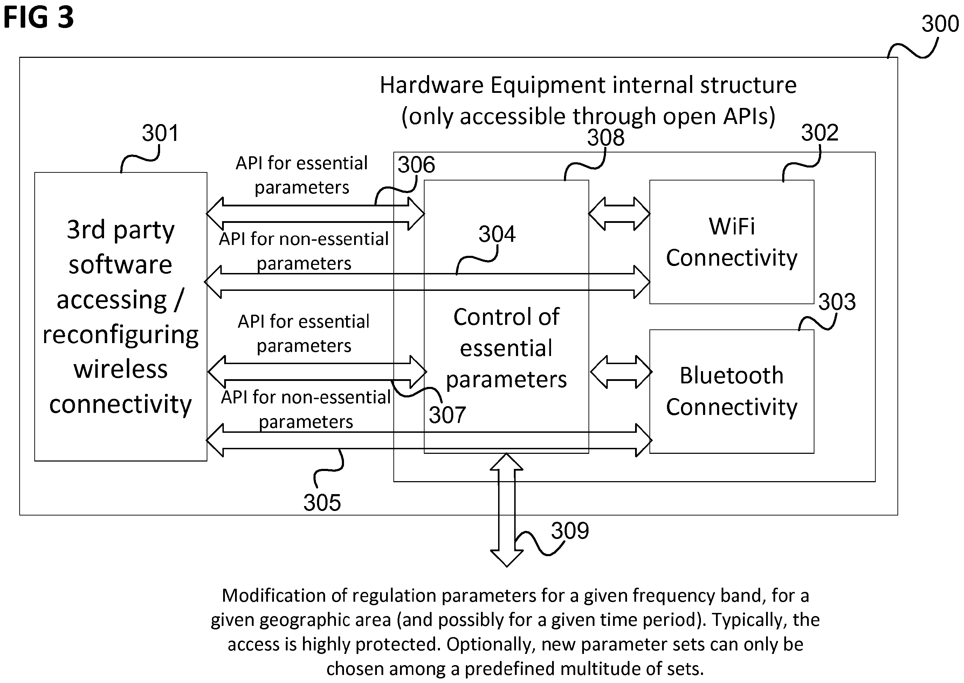

Optionally, external modification of the control entity 208 may be allowed. A corresponding architecture is illustrated in figure 3.

Figure 3 shows a radio equipment 300 allowing an external modification of parameter restrictions. These aspects are not according to the invention and are provided for illustration purposes only.

The radio equipment 300 includes an application processor 301, communication subsystems 302, 303, interfaces 304 to 307 and a control entity 308 similarly to the radio equipment 200 shown in figure 2.

In this example, the control entity 308 includes a modification interface 309 which allows external modification of the control entity 308, e.g. by a server computer connected to the radio equipment 300 via a radio connection. This may be for example be desirable in case that regulation rules change for a given area. The access to modify parameter limits applied by the control entity 308 via the modification interface 309 may be strictly protected, e.g. through suitable authorization and encryption features. In order to provide further security, it may be allowed to only switch between predefined parameter sets. For example, three tables of maximum output limits are defined, the first one with low level limits, the second one with medium level limits and the last one with high level limits and only one of the three available tables may for example be selected via the modification interface 309. Thus, problems can be avoided that may occur if parameters limits can be chosen freely.

The modification interface 309 may for example be accessed by means of a software component (external to the radio equipment 300) used by the manufacturer of the radio equipment 300, e.g. via a wireless connection (e.g. via one of the communication subsystems 302, 303) to allow the adaptation of essential parameter limits or allowable essential parameter values when the radio equipment 300 has been given (e.g. sold) to a user.

In order to allow the control entity 208, 308 to take regulations into account that are applicable at the location at which the radio equipment 200, 300 is operated, since many of the regulation constraints differ in various countries, the radio equipment 200, 300 may be provided with the capability to obtain location information, i.e. information about its location . Taking into account various regional regulations allows ensuring a correct joint operation of hardware and software for different regions.

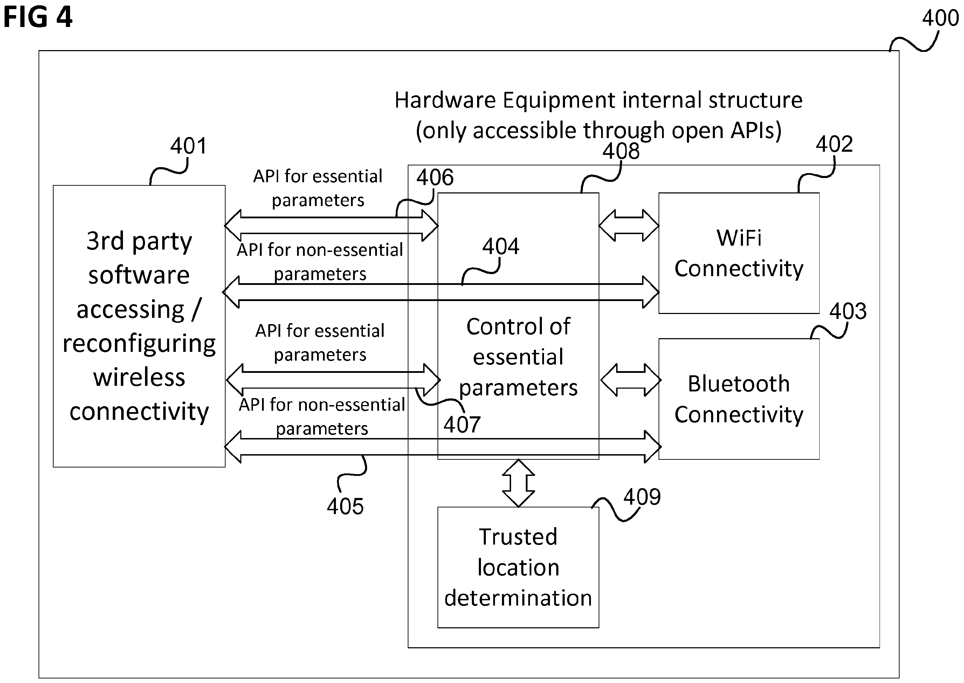

Figure 4 shows a radio equipment 400 including a trusted location determination. These aspects are not according to the invention and are provided for illustration purposes only.

The radio equipment 400 includes an application processor 401, communication subsystems 402, 403, interfaces 404 to 407 and a control entity 408 similarly to the radio equipment 200 shown in figure 2.

In this example, the radio equipment 400 further includes a trusted location determination entity 409.

The trusted location determination entity 409 determines location information and provides the location information to the control entity 408.

The trusted location determination entity 409 allows the radio equipment 400 to identify the applicable regulation rules for the current position of the radio equipment 400 (e.g. a mobile device). It may furthermore make the radio equipment 400 robust against (malicious) provisioning of false location information from external sources.

The trusted location determination entity 409 may for example be implemented by including dedicated location determination features into the hardware implementing the control entity 408. For example, a GPS receiver could be included (or generally a receiver for satellite positioning), e.g. on a chip implementing the control entity 408. The control entity 408 can then use location information provided by the GPS receiver to identify the applicable regulations, i.e. an applicable set of allowable parameter values or allowable parameter ranges.

The trusted location determination entity 409 may also be configured to determine location information based on an interaction with a communication subsystem 402, 403 (e.g. a subsystem providing connectivity according to WiFi or LTE (Long Term Evolution) etc.). Typically, a connection to a base station or an access point provides rough location information, for example a base station identification. This level of information may be fully sufficient, since the controller 408 needs only to identify in which administrative domain it is and a further refinement may not be required. The related connectivity component (e.g. communication subsystem) may be implemented in an on-equipment-hardwired fashion which is fully under control and fully trusted by the manufacturer.

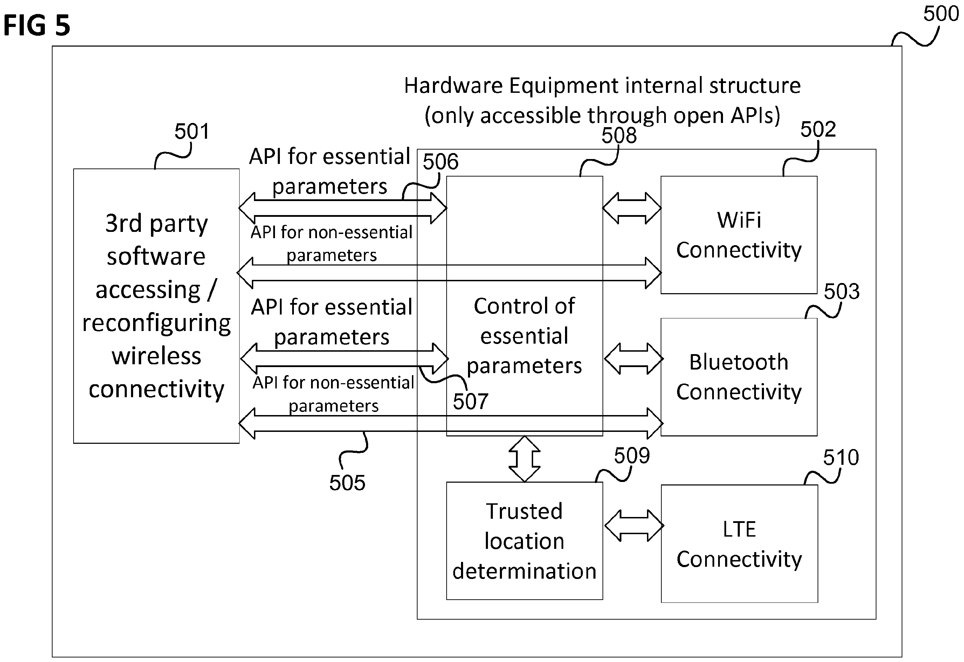

Figure 5 shows a radio equipment 500 acquiring location information for essential parameter control via a connectivity subsystem. These aspects are not according to the invention and are provided for illustration purposes only.

The radio equipment 500 includes an application processor 501, communication subsystems 502, 503, interfaces 504 to 507, a control entity 508 and a trusted location determination entity 509 similarly to the radio equipment 400 shown in figure 4.

In this example, the radio equipment 500 includes a further communication subsystem 510 providing, in this example, LTE connectivity.

In this example, LTE connectivity is used in order to determine the presence of the radio equipment in a given regulation domain (e.g., Americas, Europe, China, Japan, ...). This is just an example and any other radio access technology providing a suitable feature may be used for this purpose, e.g. GSM (Global System for Mobile Communications), UMTS (Universal Mobile Telecommunications System), WiFi etc.

In case that the further communication subsystem 510 cannot provide information on the location of the user, the control entity 508 may choose a parameter set which is compatible to any regulation requirement. For example, let the maximum output power level in a specific frequency f_0 is defined to be p_max_f0_Americas for the Americas, p_max_f0_Europe for Europe, p_max_f0_China for China, p_max_f0_Japan for Japan, etc. Let furthermore the determination of the radio equipment's location not be possible then the control entity 508 may choose the maximum output power level as p_max_applied = min{ p_max_f0_Americas, p_max_f0_Europe, p_max_f0_China, p_max_f0_Japan, ...}. Thus, the power output level will be in compliance with any user location. A similar procedure may be used for other essential parameters.

Since it is typically sufficient to only detect whether the user is present in a given regulation domain (e.g., Americas, Europe, Japan, China, etc.) for determining the correct local regulation a precise determination of the geographic location is not required. It is for example sufficient to identify a radio service which only exists in a certain region. For example, if there is a specific radio service (such as a beacon signal, a time synchronization signal or similar) which only exists in Europe in a specific frequency band, the detection of this service is sufficient in order to determine that the radio equipment is located in Europe (by reading for example the country ID in a beacon signal). It is also possible to detect other radio emissions that are known to be only available in a given country, e.g. specific TV signals, specific radio signals, signals of other commercial or governmental services, etc. The same is applicable for any other domains or regions such as Americas, Japan, China, etc.

With the approaches described above an equipment manufacturer, such as a manufacturer of laptops, desktops, tablets, mobile devices, etc. can keep its liability in the context of the RED Article 3(3)(i) which requires a single party taking responsibility for the joint operation of hardware and software under control. In the above approaches the control entity, which may be implemented as a trusted decision making entity, can be seen to take the final decision on reconfiguration requests and thus the manufacturer can take responsibility for the final correct configuration of the radio equipment.

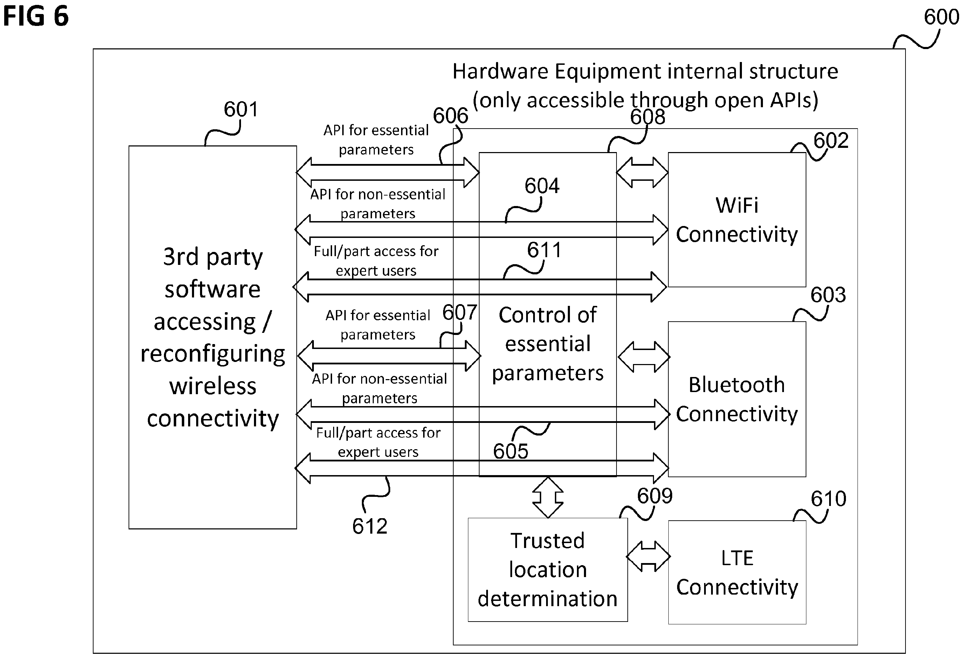

According to various embodiments, authorized expert users may be allowed (unlimited or uncontrolled or at least (compared to standard users) more extensive) access to essential parameters as illustrated in figure 6.

Figure 6 shows a radio equipment 600 allowing authorized expert users to circumvent internal essential parameter control. These aspects are not according to the invention and are provided for illustration purposes only.

The radio equipment 600 includes an application processor 601, communication subsystems 602, 603, interfaces 604 to 607, a control entity 608, a trusted location determination entity 609 and a further communication subsystem 610 similarly to the radio equipment 500 shown in figure 5.

In this example, a first additional direct interface 611 (for accessing the WiFi communication subsystem) and a second additional direct interface 612 (for accessing the Bluetooth communication subsystem) are provided in a radio equipment which allows a certain user (e.g. an expert user) to circumvent the control entity 608 when requesting a modification of an essential parameter.

This may be desirable since, while the approaches described above allow blocking unauthorized configuration parameter sets, some applications may require the possibility to allow authorized expert users to circumvent the protection mechanisms and to select any essential parameter set even if it is not in compliance to the applied regulation framework. This may for example be required for testing purposes or for special applications, such as in a closed factory environment where no interference to third party devices is possible or in emergency situations or similar.

Certain users (e.g. expert users) may therefore for example be provided with an access code by the manufacturer which allows them to circumvent the protection mechanisms either fully or partly via the additional direct interfaces 611, 612. An authorization to circumvent partly may for example restrict the concerned user to a specific maximum output power level (higher than the regulation requirement but still lower than the maximum level supported by the hardware) or to a number of pre-defined parameter sets (including output power levels, frequency bands, bandwidths, etc.).

For implementing the various interfaces 604 to 607, 611, 622 regarding the chipset API requirements the underlying SoC (System on Chip) or chipset may for example implement the following features:
- Provide an API that allows controlled access to essential parameters as described above (for indirect interfaces 604, 605). This ensures that the radio equipment 600 always operates in compliance to the regulation requirements.
- Provide an API that allows full access to non-essential parameters (for direct interfaces 602, 603).
- Provide an API that allows expert users to fully or partly access essential parameters which is only accessible when an authorization code is provided, e.g. input (for additional direct interfaces 611, 612).

It should be noted that several intermediate levels of expert users may exist, i.e. different expert user levels offer different levels of access to the essential parameters. For example, a first expert user level may only allow access to output power levels, a second expert user level may only allow access to output power levels up to a certain limit (below the maximum output power level possibilities of the previous item), a third expert user level may only allow access to frequency band selection and a fourth expert user level may allow both access to output power and frequency band selection, etc.

These additional direct interfaces 611, 612 can be implemented as independent APIs as illustrated in figure 6 or as a single API and the treatment of the request is handled internally in the SoC or chipset, identifying whether a parameterization request relates to essential parameters. Thus, a request running over a direct interface 604, 605, 611, 612 may also run via the control entity 608 but the control entity 608 may not monitor or control this request. The direct interfaces 604, 605, 611, 612 can therefore also be seen as interfaces free from control of the control entity 608.

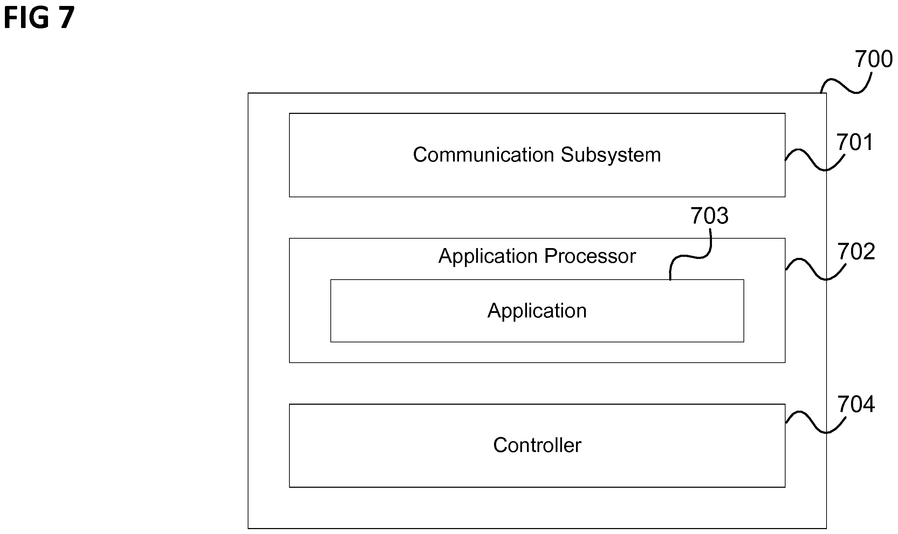

In summary, according to various examples, a communication device is provided as illustrated in figure 7.

Figure 7 shows a communication device 700.

The communication device 700 includes a communication subsystem 701 including a baseband processor and a radio frequency transceiver and an application processor 702 configured to execute an application 703, wherein executing the application includes generating, in accordance with the application, values of communication parameters for the communication subsystem 701.

The communication device 700 further includes a controller 704 configured to receive the values of the communication parameters from the application processor 702, to determine a geographic location of the communication device 700 and check whether the values of the communication parameters are valid (i.e. allowed) with regard to local regulations effective for the geographic location and to control the communication subsystem 701 in accordance with the values of the communication parameters based on whether the values of the communication parameters are valid with regard to the local regulations.

According to various examples, in other words, an application executed by an application processor of a communication device, e.g. a radio equipment such as a mobile radio communication, e.g. a mobile terminal (such as a mobile telephone, laptop, tablet etc.) has an interface to a communication subsystem for providing communication parameters to the communication subsystem which includes a controller configured to control the values of the communication parameters supplied to the communication subsystem based on local regulations. For this, the controller is configured to determine a location of the communication device, e.g. via the communication subsystem or another communication subsystem or by means of a positioning subsystem (e.g. a GPS receiver), to determine applicable regulations for the determined location of the communication device and controls the communication parameters based on the applicable regulations.

If a value provided by an application to be supplied to the communication subsystem is not valid, the controller may block the value from being supplied to the communication subsystem or may be forced to a level which is allowed by the locally application regulation.

According to various examples, the controller (e.g. a CMB as described above) may be seen as a black box which filters any incoming reconfiguration requests on radio parameters, such that the manufacturer can be certain that only approved configurations are executed.

The controller may also give feedback to the application, e.g. inform the application that it has adapted the value of a communication parameter whose original value (as provided by the application) was not valid, e.g. was beyond a limit, or that it has blocked the supply of the value of a communication parameter to the communication subsystem. The controller may also provide the communication subsystem with a recommendation of a valid (i.e. allowable) value of the communication parameter.

The communication device may for example include a memory which stores, for a plurality of locations (e.g. regions or countries) an indication of which values of the communication parameters are valid, e.g. a table specifying valid value ranges or lists of valid values for each communication parameter of the communication parameters.

The communication device (e.g. the communication subsystem, the application processor and the controller) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a " processor". The communication device may for example be at least partially be implemented by a transceiver may for example be at least partially implemented by a modem (e.g. an LTE modem), a baseband processor or other transceiver components or also by an application processor. The communication device may for example be a communication terminal such as a portable phone and may include typical communication terminal devices such as a transceiver (including e.g. a baseband processor, one or more filters, transmit chains, receive chains, amplifiers etc.), an antenna, a subscriber identity module, an application processor, a memory, a display, a battery, a speaker, a microphone etc.

However, according to various embodiments, the controller is a hardware processor which is for example implemented on the same chip as the communication subsystem.

The communication parameters are for example "essential parameters" according to a regulation, e.g. the European RED (Radio Equipment Directive).

For example, the controller may, by controlling the values of the communication parameters, ensure that the communication device fulfills the "essential requirements" of Article 3 of the RED:
1. Radio equipment shall be constructed so as to ensure:
   (a) the protection of health and safety of persons and of domestic animals and the protection of property, including the objectives with respect to safety requirements set out in Directive 2014/35/EU, but with no voltage limit applying;
   (b) an adequate level of electromagnetic compatibility as set out in Directive 2014/30/EU.
2. Radio equipment shall be so constructed that it both effectively uses and supports the efficient use of radio spectrum in order to avoid harmful interference.
3. Radio equipment within certain categories or classes shall be so constructed that it complies with the following essential requirements:
   (a) radio equipment interworks with accessories, in particular with common chargers;
   (b) radio equipment interworks via networks with other radio equipment;
   (c) radio equipment can be connected to interfaces of the appropriate type throughout the Union;
   (d) radio equipment does not harm the network or its functioning nor misuse network resources, thereby causing an unacceptable degradation of service;
   (e) radio equipment incorporates safeguards to ensure that the personal data and privacy of the user and of the subscriber are protected;
   (f) radio equipment supports certain features ensuring protection from fraud;
   (g) radio equipment supports certain features ensuring access to emergency services;
   (h) radio equipment supports certain features in order to facilitate its use by users with a disability;
   (i) radio equipment supports certain features in order to ensure that software can only be loaded into the radio equipment where the compliance of the combination of the radio equipment and software has been demonstrated.

For example, regarding security (e.g. corresponding to (e) and (f) of the above list), the controller may check whether a communication parameter related to security, e.g. a security protocol used, a key length, etc., has a valid value, e.g. ensures a minimum security level.

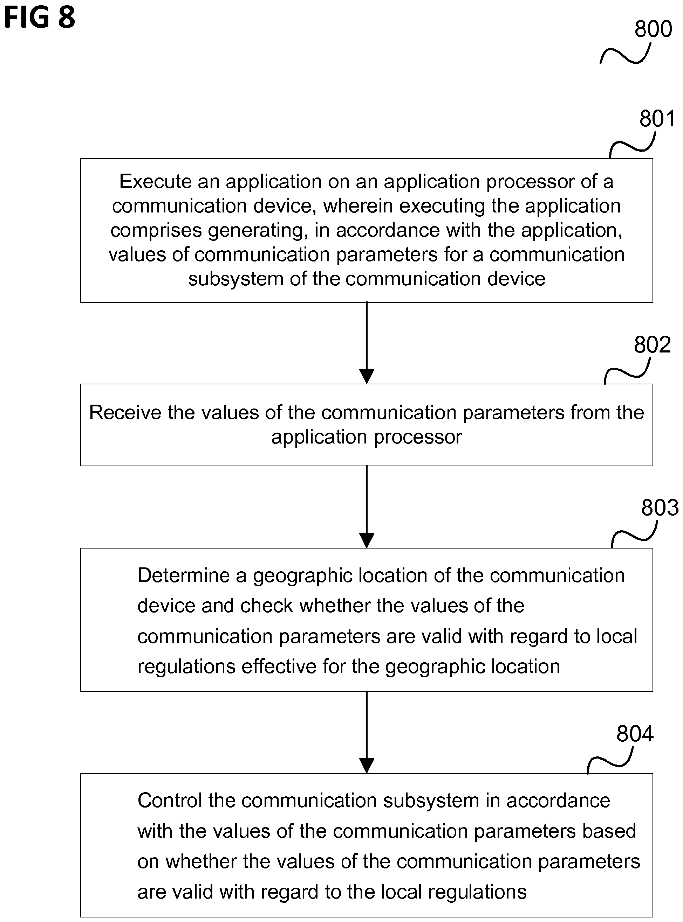

The communication device 700 for example executes a method as illustrated in figure 8.

Figure 8 shows a flow diagram 800 illustrating a method for controlling a communication subsystem including a baseband processor and a radio frequency transceiver, for example performed by a communication device.

In 801, the communication device executes an application an application processor of the communication device, wherein executing the application includes generating, in accordance with the application, values of communication parameters for a communication subsystem of the communication device.

In 802, a controller of the communication device receives the values of the communication parameters from the application processor.

In 803, the controller determines, prior to configuring the communication subsystem according to the received values of the communication parameters, a geographic location of the communication device and checks whether the values of the communication parameters are valid with regard to local regulations effective for the geographic location.

In 804, the controller controls the communication subsystem in accordance with the values of the communication parameters based on whether the values of the communication parameters are valid with regard to the local regulations.

While specific aspects have been described, it should be understood by those skilled in the art that various changes in form and detail may be made therein without departing from the scope of the aspects of this disclosure as defined by the appended claims. The scope is thus indicated by the appended claims.

## Claims

1. A communication device (700) comprising:
a communication subsystem (701) comprising a baseband processor and a radio frequency transceiver;
an application processor (702) configured to execute an application,
wherein executing the application comprises generating, in accordance with the application, values of communication parameters for the communication subsystem;
a controller (704) configured to
- receive the values of the communication parameters from the application processor;
- determine, prior to configuring the communication subsystem according to the received values of the communication parameters, a geographic location of the communication device and check whether the values of the communication parameters are valid with regard to local regulations effective for the geographic location; and
- control the communication subsystem in accordance with the values of the communication parameters based on whether the values of the communication parameters are valid with regard to the local regulations.

2. The communication device of claim 1, wherein controlling the communication subsystem in accordance with the values of the communication parameters comprises supplying the values of the communication parameters to the communication subsystem.

3. The communication device of claim 1 or 2, wherein controlling the communication subsystem in accordance with the values of the communication parameters comprises configuring the communication subsystem according to the values of the communication parameters.

4. The communication device of any one of claims 1 to 3, wherein controlling the communication subsystem in accordance with the values of the communication parameters comprises adapting one or more of the values of the communication parameters based on the local regulations before supplying the values to the communication subsystem.

5. The communication device of any one of claims 1 to 4, wherein the controller is configured to adapt the value of a communication parameter of the communication parameters, if the value of the communication parameter is not valid according to the local regulations, to a value that is valid according to the local regulations before supplying the value to the communication subsystem.

6. The communication device of any one of claims 1 to 5, wherein the controller is configured to block a value of a communication parameter of the communication parameters from being supplied to the communication subsystem if the value is not valid with regard to the local regulations.

7. The communication device of any one of claims 1 to 6, comprising a chip implementing the communication subsystem.

8. The communication device of claim 7, wherein the chip comprises the controller.

9. The communication device of any one of claims 1 to 8, comprising a positioning subsystem configured to determine the geographic location of the communication device, wherein the controller is configured to determine the geographic location of the communication device based on the geographic location determined by the positioning subsystem.

10. The communication device of claim 9, comprising a chip implementing the communication subsystem, wherein the chip comprises the positioning subsystem.

11. The communication device of claim 9 or 10, wherein the positioning subsystem is configured to determine the geographic location of the communication device based on a location indication transmitted by a base station or access point of a radio communication network.

12. The communication device of any one of claims 9 to 11, wherein the positioning subsystem is configured to determine the geographic location based on satellite positioning.

13. The communication device of any one of claims 1 to 12, wherein the controller comprises a memory storing, for each of a plurality of geographic locations, an indication of valid values of the communication parameters at the geographic location.

14. The communication device of any one of claims 1 to 13, wherein checking whether the values of the communication parameters are valid with regard to local regulations effective for the geographic location comprises checking whether the communication parameters underlie restrictions according to the local regulations.

15. A method for controlling a communication subsystem (701) comprised in a communication device (700), the communication device further comprising an application processor (702) and a controller (704), the method performed by the communication device and comprising:
executing an application on the application processor, wherein executing the application comprises generating, in accordance with the application, values of communication parameters for the communication subsystem, the communication subsystem comprising a baseband processor and a radio frequency transceiver;
receiving the values of the communication parameters from the application processor;
determining, prior to configuring the communication subsystem according to the received values of the communication parameters, a geographic location of the communication device and checking whether the values of the communication parameters are valid with regard to local regulations effective for the geographic location; and
controlling the communication subsystem in accordance with the values of the communication parameters based on whether the values of the communication parameters are valid with regard to the local regulations.

## Patentansprüche

1. Kommunikationsvorrichtung (700), die Folgendes umfasst:
ein Kommunikationssubsystem (701), das einen Basisbandprozessor und einen Funkfrequenzsendeempfänger umfasst;
einen Anwendungsprozessor (702), der zum Ausführen einer Anwendung ausgelegt ist,
wobei das Ausführen der Anwendung Erzeugen, gemäß der Anwendung, von Werten von Kommunikationsparametern für das Kommunikationssubsystem umfasst;
eine Steuerung (704), ausgelegt zum
- Empfangen der Werte der Kommunikationsparameter von dem Anwendungsprozessor;
- Bestimmen, bevor das Kommunikationssubsystem gemäß den empfangenen Werten der Kommunikationsparameter konfiguriert wird, eines geografischen Standorts der Kommunikationsvorrichtung und Prüfen, ob die Werte der Kommunikationsparameter im Hinblick auf für den geografischen Standort geltende lokale Vorschriften gültig sind; und
- Steuern des Kommunikationssubsystems gemäß den Werten der Kommunikationsparameter basierend darauf, ob die Werte der Kommunikationsparameter im Hinblick auf die lokalen Vorschriften gültig sind.

2. Kommunikationsvorrichtung nach Anspruch 1, wobei das Steuern des Kommunikationssubsystems gemäß den Werten der Kommunikationsparameter Liefern der Werte der Kommunikationsparameter an das Kommunikationssubsystem umfasst.

3. Kommunikationsvorrichtung nach Anspruch 1 oder 2, wobei das Steuern des Kommunikationssubsystems gemäß den Werten der Kommunikationsparameter Konfigurieren des Kommunikationssubsystems gemäß den Werten der Kommunikationsparameter umfasst.

4. Kommunikationsvorrichtung nach einem der Ansprüche 1 bis 3, wobei das Steuern des Kommunikationssubsystems gemäß den Werten der Kommunikationsparameter Anpassen eines oder mehrerer der Werte der Kommunikationsparameter basierend auf den lokalen Vorschriften, bevor die Werte an das Kommunikationssubsystem geliefert werden, umfasst.

5. Kommunikationsvorrichtung nach einem der Ansprüche 1 bis 4, wobei die Steuerung ausgelegt ist zum Anpassen des Werts eines Kommunikationsparameters der Kommunikationsparameter, falls der Wert des Kommunikationsparameters gemäß dem lokalen Vorschriften nicht gültig ist, zu einem Wert, der gemäß den lokalen Vorschriften gültig ist, bevor der Wert an das Kommunikationssubsystem geliefert wird.

6. Kommunikationsvorrichtung nach einem der Ansprüche 1 bis 5, wobei die Steuerung ausgelegt ist zum Blockieren des Lieferns eines Werts eines Kommunikationsparameters der Kommunikationsparameter an das Kommunikationssubsystem, falls der Wert im Hinblick auf die lokalen Vorschriften nicht gültig ist.

7. Kommunikationsvorrichtung nach einem der Ansprüche 1 bis 6, die einen das Kommunikationssubsystem implementierenden Chip umfasst.

8. Kommunikationsvorrichtung nach Anspruch 7, wobei der Chip die Steuerung umfasst.

9. Kommunikationsvorrichtung nach einem der Ansprüche 1 bis 8, umfassend ein Positionsbestimmungssubsystem, ausgelegt zum Bestimmen des geografischen Standorts der Kommunikationsvorrichtung, wobei die Steuerung ausgelegt ist zum Bestimmen des geografischen Standorts der Kommunikationsvorrichtung basierend auf dem durch das Positionsbestimmungssubsystem bestimmten geografischen Standort.

10. Kommunikationsvorrichtung nach Anspruch 9, die einen das Kommunikationssubsystem implementierenden Chip umfasst, wobei der Chip das Positionsbestimmungssubsystem umfasst.

11. Kommunikationsvorrichtung Anspruch 9 oder 10, wobei das Positionsbestimmungssubsystem ausgelegt ist zum Bestimmen des geografischen Standorts der Kommunikationsvorrichtung basierend auf einer durch eine Basisstation oder einen Zugangspunkt eines Funkkommunikationsnetzes übertragene Standortangabe.

12. Kommunikationsvorrichtung nach einem der Ansprüche 9 bis 11, wobei das Positionsbestimmungssubsystem ausgelegt ist zum Bestimmen des geografischen Standorts basierend auf Satellitenpositionsbestimmung.

13. Kommunikationsvorrichtung nach einem der Ansprüche 1 bis 12, wobei die Steuerung einen Speicher umfasst, der für jeden von mehreren geografischen Standorten eine Angabe gültiger Werte der Kommunikationsparameter an dem geografischen Standort speichert.

14. Kommunikationsvorrichtung nach einem der Ansprüche 1 bis 13, wobei das Prüfen, ob die Werte der Kommunikationsparameter im Hinblick auf für den geografischen Standort geltende lokale Vorschriften gültig sind, Prüfen, ob die Kommunikationsparameter Einschränkungen gemäß den lokalen Vorschriften unterliegen, umfasst.

15. Verfahren zum Steuern eines in einer Kommunikationsvorrichtung (700) enthaltenen Kommunikationssubsystems (701), wobei die Kommunikationsvorrichtung ferner einen Anwendungsprozessor (702) und eine Steuerung (704) umfasst, wobei das Verfahren durch die Kommunikationsvorrichtung durchgeführt wird und Folgendes umfasst:
Ausführen einer Anwendung auf dem Anwendungsprozessor,
wobei das Ausführen der Anwendung Erzeugen, gemäß der Anwendung, von Werten von Kommunikationsparametern für das Kommunikationssubsystem umfasst, wobei das Kommunikationssubsystem einen Basisbandprozessor und einen Funkfrequenzsendeempfänger umfasst;
Empfangen der Werte der Kommunikationsparameter von dem Anwendungsprozessor;
Bestimmen, bevor das Kommunikationssubsystem gemäß den empfangenen Werten der Kommunikationsparameter konfiguriert wird, eines geografischen Standorts der Kommunikationsvorrichtung und Prüfen, ob die Werte der Kommunikationsparameter im Hinblick auf für den geografischen Standort geltende lokale Vorschriften gültig sind; und
Steuern des Kommunikationssubsystems gemäß den Werten der Kommunikationsparameter basierend darauf, ob die Werte der Kommunikationsparameter im Hinblick auf die lokalen Vorschriften gültig sind.

## Revendications

1. Dispositif de communication (700), comprenant :
un sous-système de communication (701) comprenant un processeur de bande de base et un émetteur-récepteur radiofréquence ;
un processeur d'application (702) configuré pour exécuter une application, l'exécution de l'application comprenant la génération, conformément à l'application, de valeurs de paramètres de communication pour le sous-système de communication ;
un contrôleur (704) configuré pour
- recevoir les valeurs des paramètres de communication depuis le processeur d'application ;
- déterminer, préalablement à la configuration du sous-système de communication selon les valeurs reçues des paramètres de communication, une position géographique du dispositif de communication et vérifier si les valeurs des paramètres de communication sont valides ou non au regard de réglementations locales en vigueur pour la position géographique ; et
- commander le sous-système de communication conformément aux valeurs des paramètres de communication selon que les valeurs des paramètres de communication sont valides ou non au regard des réglementations locales.

2. Dispositif de communication selon la revendication 1, dans lequel la commande du sous-système de communication conformément aux valeurs des paramètres de communication comprend la fourniture des valeurs des paramètres de communication au sous-système de communication.

3. Dispositif de communication selon la revendication 1 ou 2, dans lequel la commande du sous-système de communication conformément aux valeurs des paramètres de communication comprend la configuration du sous-système de communication selon les valeurs des paramètres de communication.

4. Dispositif de communication selon l'une quelconque des revendications 1 à 3, dans lequel la commande du sous-système de communication conformément aux valeurs des paramètres de communication comprend l'adaptation d'une ou de plusieurs des valeurs des paramètres de communication sur la base des réglementations locales avant la fourniture des valeurs au sous-système de communication.

5. Dispositif de communication selon l'une quelconque des revendications 1 à 4, dans lequel le contrôleur est configuré pour adapter la valeur d'un paramètre de communication des paramètres de communication, si la valeur du paramètre de communication n'est pas valide selon les réglementations locales, à une valeur qui est valide selon les réglementations locales avant la fourniture de la valeur au sous-système de communication.

6. Dispositif de communication selon l'une quelconque des revendications 1 à 5, dans lequel le contrôleur est configuré pour bloquer la fourniture d'une valeur d'un paramètre de communication des paramètres de communication au sous-système de communication si la valeur n'est pas valide au regard des réglementations locales.

7. Dispositif de communication selon l'une quelconque des revendications 1 à 6, comprenant une puce implémentant le sous-système de communication.

8. Dispositif de communication selon la revendication 7, dans lequel la puce comprend le contrôleur.

9. Dispositif de communication selon l'une quelconque des revendications 1 à 8, comprenant une sous-système de localisation configuré pour déterminer la position géographique du dispositif de communication, le contrôleur étant configuré pour déterminer la position géographique du dispositif de communication sur la base de la position géographique déterminée par le sous-système de localisation.

10. Dispositif de communication selon la revendication 9, comprenant une puce implémentant le sous-système de communication, la puce comprenant le sous-système de localisation.

11. Dispositif de communication selon la revendication 9 ou 10, dans lequel le sous-système de localisation est configuré pour déterminer la position géographique du dispositif de communication sur la base d'une indication de position transmise par une station de base ou un point d'accès d'un réseau de radiocommunication.

12. Dispositif de communication selon l'une quelconque des revendications 9 à 11, dans lequel le sous-système de localisation est configuré pour déterminer la position géographique sur la base d'une localisation par satellites.

13. Dispositif de communication selon l'une quelconque des revendications 1 à 12, dans lequel le contrôleur comprend une mémoire stockant, pour chacune d'une pluralité de positions géographiques, une indication de valeurs valides des paramètres de communication à la position géographique.

14. Dispositif de communication selon l'une quelconque des revendications 1 à 13, dans lequel la vérification si les valeurs des paramètres de communication sont valides ou non au regard de réglementations locales en vigueur pour la position géographique comprend la vérification si les paramètres de communication sont soumis ou non à des restrictions selon les réglementations locales.

15. Procédé de commande d'un sous-système de communication (701) compris dans un dispositif de communication (700), le dispositif de communication comprenant en outre un processeur d'application (702) et un contrôleur (704), le procédé étant réalisé par le dispositif de communication et comprenant :
l'exécution d'une application sur le processeur d'application, l'exécution de l'application comprenant la génération, conformément à l'application, de valeurs de paramètres de communication pour le sous-système de communication, le sous-système de communication comprenant un processeur de bande de base et un émetteur-récepteur radiofréquence ;
la réception des valeurs des paramètres de communication depuis le processeur d'application ;
la détermination, préalablement à la configuration du sous-système de communication selon les valeurs reçues des paramètres de communication, d'une position géographique du dispositif de communication et la vérification si les valeurs des paramètres de communication sont valides ou non au regard de réglementations locales en vigueur pour la position géographique ; et
la commande du sous-système de communication conformément aux valeurs des paramètres de communication selon que les valeurs des paramètres de communication sont valides ou non au regard des réglementations locales.
